# EUROPEAN PATENT SPECIFICATION

(11) **EP 1 842 635 B1**
(45) Date of publication and mention of the grant of the patent: **15.06.2016**
(21) Application number: 07109070.8
(22) Date of filing: 05.07.2005
(51) Int. Cl.: B27B 9/04, B23Q 9/00

(54) **Circular saw with anti-kickback device**
Rückschlagsicherung für eine Kreissäge
Dispositif anti-recul pour scie circulaire

(30) Priority: 01.06.2005 EP 05253356
(43) Date of publication of application: 10.10.2007
(62) Divisional of application: 05014514.3
(73) Proprietor: Black & Decker, Inc., Newark, DE 19711 (US)
(72) Inventor: Wilson, Mike, Crook, Durham DL15 9TN (GB); Rogers, Joanne, Bishop Auckland, Durham DL14 6XL (GB)
(74) Representative: Bell, Ian Stephen

(56) References cited:
- EP-A- 0 162 648
- EP-A- 1 418 018
- DE-A1- 3 523 486
- US-A- 5 918 521

## Description

The present invention relates to anti-kickback devices suitable for use on a manually operated portable circular saw, or the like. The devices are particularly suited for use on a circular saw which has a plunge-cut action.

Circular saws with a plunge-cut action are known. Typically, such saws comprise a motor and gearbox disposed in a housing which includes a handle and manually operated switch for activating the motor. The housing is pivotally attached to a base plate which includes a cowl for accommodating a saw blade which is attached to the motor's or gearbox's output spindle. Springs are arranged to urge the housing into a position where the saw blade is wholly accommodated within the cowl. During use, a user places the base plate on a work-piece, depresses the switch to activate the motor thereby initiating the saw blade's rotation and then plunges the housing towards the work-piece and base plate such that the rotating saw blade passes through an aperture in the base plate and into the work-piece. From this position, the saw can be moved in a forward direction along a cut-line thereby cutting a slot in the work-piece. DE19635527 describes such a saw. Furthermore, FESTOOL GmbH sells such a saw under their product number TS55.

Kickback can occur as the saw is plunged into the work-piece. The kickback phenomenon is not wholly understood, but it often occurs in the early stages of plunging the blade into the work-piece. As the saw blade first engages with the work-piece kick-back can cause the saw to jump out of the work-piece and back towards the operator with sufficient force to hit the operator. Kick-back might also occur if the saw is twisted out of alignment with the cut during cutting so that the blade catches the edge of the slot cut by the blade. As kick-back occurs, it is thought that the blade "grabs" the work-piece in the slot being cut. In the worse case scenario, the blade can stop rotating with respect to the work-piece and, as the motor continues to drive the blade, the saw is thrown off the work-piece and towards the user. The user is typically unable to react as kick-back occurs and has insufficient time to disengage power to the motor.

Thus, kickback is potentially dangerous and could cause severe injury. Furthermore, if a guide rail is being used to guide the cutting direction of the saw as kickback occurs, the saw can jump out of the work-piece and across rail whilst the blade is exposed from the cowl and still rotating thereby damaging the rail and/or saw blade.

Guide rails are known and can be used to guide various power tools, such as circular saws, routers or jigsaws. The rail can be placed on a work-piece and the tool is then placed on the rail. Clamping devices are often used to secure the guide rail to the work-piece. Typically a rail comprises a length of extruding aluminium having a rib which extends along the length of the rail parallel to an edge of the rail along which the power tool operates. In the case of a circular saw, the rib engages with a channel formed in the base plate or footplate of the saw. The saw can be placed on the rail such that the rib and channel cooperate with one another. The operator is then able to run the saw along the rail whilst it cuts the work-piece. A strip of material having a relatively high coefficient of fiction is disposed on the surface of the rail which engages the work-piece to maintain the guide rail in position during use of the power tool. This is particularly useful if clamping devices are not being used.

EP1418018, on which the preamble of claim 1 is based, describes a guide rail comprising a stop part having an overlapping portion. A plunge-action saw base plate has a protruding tang which fits between the guide rail and overlapping portion of the stop part. The stop part can be disposed in a channel running along the length of the guide rail and fixed in position with a thumbscrew arrangement. Before plunging the saw into a work-piece, the user places the guide rail on the work-piece and arranges the stop part in the desired position. The base plate of the saw is then positioned on the guide rail such that the tang abuts the stop part. Thus, if kickback occurs, the base plate is held on the rail and prevented from jumping backwards towards the operator by the stop part.

Embodiments of the present invention aim to provide an improved anti-kickback mechanism. In short, an integral anti-kickback mechanism is provided. This arrangement has the advantage of negating the need for the separate anti-kickback device, as described above, which needs to be disposed on the guide rail and manually adjusted into the appropriate position for use.

More specifically, the present invention provides a hand operated circular saw comprising the features of claim 1; The mechanism should be arranged to prevent movement of the saw towards the user. Thus, should kick-back occur, the saw is prevented from moving back along a guide rail towards the operator. Advantageously, such a mechanism can be integral with the circular saw so that the user need only place the saw on the guide rail - there is no need for a separate stopping device to be adjusted and locked onto the guide rail. Furthermore, the mechanism does not hinder proper use of the saw on a guide rail.

In the first position, the saw blade disposed on the spindle is accommodated by the cowl and in the second position a portion of the saw blade protrudes through an aperture in the base plate. Of course, a portion of the saw blade might be exposed to the user when the blade is disposed in the cowl, such as a central portion of the blade to facilitate removal of the blade from the spindle.

The present invention provides an anti-kickback device for use on a circular saw comprising a mechanism arranged to cooperate with a portion of a guide rail when the saw is disposed on a guide rail, such that during use the mechanism allows the saw to move with respect to the guide rail in a first direction and the mechanism prevents free movement of the saw with respect to the guide rail in a second direction opposite to the first direction. Thus, an anti-kickback device according to the present invention could be retro-fitted to existing circular saws which do not have an anti-kickback device.

Preferably, the anti-kickback mechanism comprises a slide member having a contact surface, said slide member being arranged on a slide surface such that the slide member can move between a top and bottom position on the slide surface, and the contact surface is arranged to face an opposite surface of a channel in the saw's base plate. The contact surface is used to jam the rib of a guide rail, gripping it between the walls of the base plate's channel and preventing further movement in the second direction.

Preferably, the slide surface is inclined with respect to the opposite surface such that a distance between the contact surface and opposite surface varies as the slide member moves between the top and bottom positions. Furthermore, the slide surface is preferably linear and the angle of inclination is preferably in the plane of the saw's base plate. Yet further, the angle of inclination can be between 4 and 10 degrees, and is preferably 6.5 degrees. Thus, effective protection against inadvertent movement of the saw in the second direction can be achieved by the interaction of the contact surface, guide rail rib, opposite surface, and slide surface.

Preferably, the slide member is a roller wherein the contact surface is defined as the point of contact between the roller and guide rail rib, when the saw is disposed on the guide rail. Advantageously, a roller is less prone to jamming and can operate with a lower likelihood of the saw becoming jammed to the guide rail when the saw is moved in the first direction. Preferably, the roller comprises a bevelled edge to facilitate easy instalment of the guide rail rib in the channel as the saw is disposed onto the guide rail.

Preferably, the slide member is urged into the top position by a spring. Thus, the slide member is urged into a position where the contact surface makes contact with the guide rail rib no matter whether the saw is moving in the first or second directions. As a result, only a very small movement in the second direction is required to cause jamming of the rib by the anti-kickback device.

Preferably, the distance between the contact surface and opposite surface is less than the width of the channel when the slide member is in the top position. Furthermore, the distance between the contact surface and opposite surface is preferably greater than the width of a guide rail's rib when the slide member is in the bottom position.

Preferably, embodiments of the present invention further comprise a manually operable button coupled to the mechanism, the button being moveable between an operative and inoperative position, such that, when the button is in the inoperative position, the mechanism offers relatively high friction between the saw and guide rail if the saw is moved in the second direction. Furthermore, the mechanism offers relatively low friction between the saw and guide rail in the first direction when the button is inoperative position. Preferably, the button is fixedly coupled to the mechanism by a pin and the pin can pass through a slot disposed in the base plate. The slot is preferably linear in its longitudinal direction and is angled with respect to the channel within an angular range, and the angular range is from an angle parallel to the channel and 10 degrees with respect to the channel. Preferably, a spring is arranged to urge the button into the inoperative position. Thus, the operator of the saw can override the anti-kickback device when the saw is disposed on a guide rail.

Preferably, the spring has a first moveable end adapted to be in contact with the slide member and second end held in position relative to the base plate by a clamp. The clamp can comprise a portion of the base plate adapted to receive one or more components of the mechanism, and a mechanism retaining plate. Either one, or both, of the portion of the base plate or retaining plate comprise a protrusion adapted to fix the second end of the spring in relation to the base plate. Thus, the spring is securely held in the anti-kickback device using simple mechanical arrangements that are relatively easy and cheap to manufacture.

Preferably, a coupling member is arranged between the spring and slide member. The coupling member is disposable on the first end of the spring and the first end is held in position relative to the coupling member by a cup or nipple. Preferably the slide member is a roller and the coupling member has a cup portion adapted to receive a portion of the roller. Thus, the coupling member can be adapted to prevent the spring from disengaging with the slide member.

Furthermore, the mechanism can alternatively comprise one or more cams, preferably rotatably disposed on a saw's footplate. Preferably, the cam is urged into a first position by a spring, and, when in the first position, a portion of the cam extends a distance into a channel of the footplate such that the shortest distance between a contact surface of the cam and the opposite surface of the channel is less than the width of the channel, or less than the width of a rib on a guide rail. Alternatively or additionally, the cam can be moveable between a first and second position, such that, in the first position a portion of the cam extends a distance into a channel of the footplate such that the shortest distance between a contact surface of the cam and the opposite surface of the channel is less than the width of the channel, and in the second position, the distance between a contact surface of the cam and the opposite surface of the channel is greater than the width of a rib on a guide rail. Advantageously, the cam arrangement requires fewer parts than the other embodiments, thereby potentially reducing costs and the occurrence of malfunctions.

Embodiments of the present invention are now described by way of example, with reference to the following drawings, in which
Figure 1 shows a schematic diagram of a circular saw embodying the present invention and being disposed on a guide rail;
Figure 2 shows schematically a first embodiment of an anti-kickback device embodying the present invention;
Figure 3 shows a cut-away view of the first embodiment of the present invention;
Figure 4 shows a second embodiment of an anti-kickback device embodying the present invention, shown in a schematic cut-away view;
Figure 5 shows the second embodiment in cross-section along line 5-5 of figure 4, and being disposed on a guide rail;
Figure 6 shows a schematic diagram of a third embodiment of the present invention;
Figure 7 shows a schematic diagram of another embodiment of the present invention disposed in a guide rail, and shown in cross-section along line 5-5 of figure 4;
Figure 8 shows the embodiment of figure 7 in plan view;
Figure 9 shows a schematic diagram of a yet further embodiment of the present invention; and
Figure 10 shows a schematic diagram of a still further embodiment of the present invention.

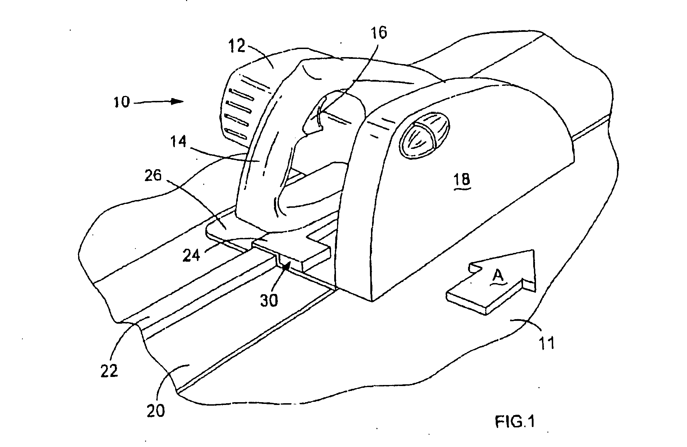

Referring to figure 1, a circular saw 10 embodying the present invention is shown in schematic form and in the plunged orientation whereby the saw blade (not shown) engages with a work-piece 11. The saw 10 comprises a motor housing 12 which includes a handle or gripping portion 14 having a switch 16 for operating the motor. A protective cowl 18 is arranged to house the saw blade. The saw is disposable on to a guide rail 20 which comprises a longitudinal rib 22. The rib engages with a channel 24 arranged on a footplate 26 of the saw 10. Thus, the saw is able to run along the guide rail, being guided by the cooperation of the rib and channel on the rail and saw respectively.

An anti-kickback device 30 is disposed on the saw's footplate 26. The device comprises a means for allowing relatively free movement of the saw in the cut direction, as indicated by arrow A, but the anti-kickback device further provides a means for preventing or restricting movement of the saw in a direction opposite to arrow A (that is, opposite to the direction of cut).

This can be achieved by providing a means for gripping the rib of the guide rail in one direction and allowing free movement in the other direction. Thus, as the saw is plunged into the work-piece, the saw can be prevented from moving in a backwards direction towards the user (opposite to arrow A) by a force exerted onto the saw as the blade engages the work-piece during plunging, for instance. Such a force exerted in this backward direction causes the anti-kick device to grip the saw to the guide rail with sufficient friction that the saw is prevented from moving towards the user along the rail. Furthermore, the saw can be prevented from jumping off the guide rail by the anti-kickback device's gripping action onto the guide rail. In this manner, the saw can be held on the guide rail when/if kickback occurs. The saw is held to the work-piece if clamping devices are used to secure the guide rail on the work-piece, via the indirect coupling of the saw to the guide rail, and the guide rail to the work-piece.

Various examples of anti-kickback devices embodying the present invention are now described. Of course, the invention is not limited to these examples.

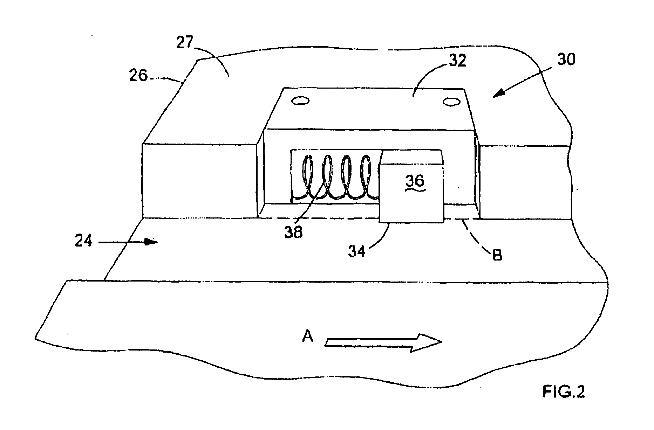

Referring to figure 2, a first embodiment 32 of an anti-kickback device 30 is shown schematically. The device 32 comprises a block 34 a portion of which extends into the channel 24 of the footplate 26 by a relatively small distance beyond the dashed line B in a first position. A surface 36 of the block is arranged to engage with a side face of the guide rail's rib when the saw is disposed on the guide rail. The block is urged into the first position by a spring 38. In the first position, the distance by which the block's surface 36 extends into the channel is sufficient for the surface to contact the rail's rib.

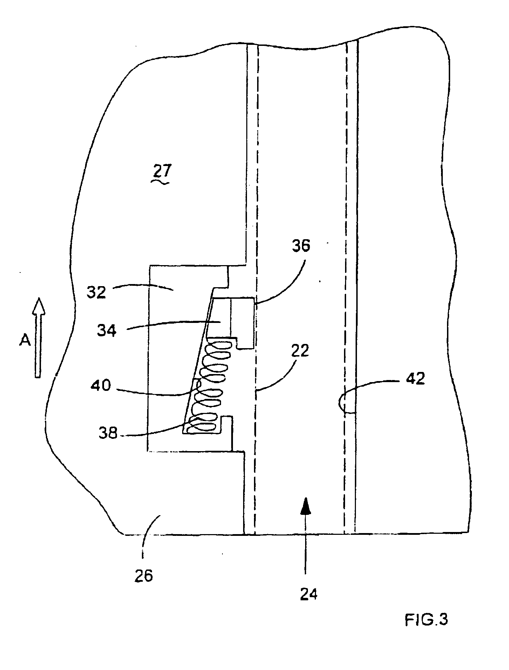

Referring to figure 3, a plan view of the first embodiment is shown in schematic form. The position a guide rail rib would occupy when the saw is disposed on the rail is shown as a dotted line 22; this line 22 indicates the rib disposed in the footplate channel 24. The block 34 can move with respect to the footplate 27 in a direction generally parallel to arrow A, since the block slides along a surface 40 which is inclined with respect to the opposite wall 42 of the channel. Thus, the distance between the guide rail rib and the surface 36 of the block varies depending on the position of the block in the device 32. The block can act as a brake by jamming the rib 22 between the block's surface 36 and opposing surface 42 of the channel when the footplate moves relative to the rib in an opposite direction to that indicated by arrow A. Conversely, the block imparts a relatively low amount of friction on the rib when the rib moves in a direction parallel to arrow A with respect to the device 32.

The spring 38 urges the block into a position such that the block 34 engages the rib when there is no relative movement of the rib and footplate. In this manner, the slightest movement of the footplate in a direction opposite to arrow A causes the block to move in a direction generally parallel to A relative to the anti-kickback device 32, thereby reducing the distance between the opposing surface of the block and channel, 36 and 42 respectively, and jamming the rib between the sliding surface 40, block and channel surface 42. However, relative movement of the footplate to the rib in a direction indicated by A is permitted because the block offers little friction between the footplate and rib. The spring constant of spring 40 should be chosen so that the force exerted on the block by the spring is relatively low.

The optimum angle of inclination between the sliding surface 40 and opposite channel surface 42 is between 4 and 10 degrees and preferably 6.5 degrees. However, any angle between 2 and 15 degrees can be used.

The block and spring are held in position in the anti-kickback device by a top-plate, not shown in figure 3, which is arranged to be flush with the underside surface 27 of the footplate 26.

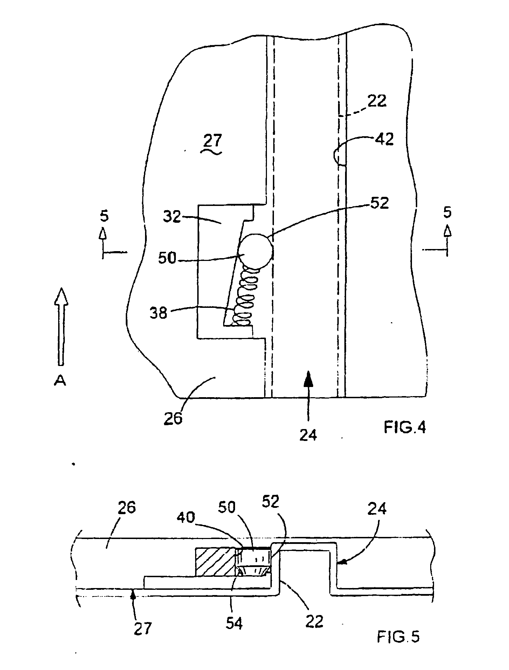

In a second, alternative embodiment, shown in figure 4, the block is replaced by a roller 50. In all other respects, the first and second embodiments operate on the same principle. The roller is cylindrical or drum-shaped so that its circumferential surface 52 engages with the rib and sliding surface. Figure 5 shows the second embodiment in cross-section along the line 5-5 (figure 4). The roller has a bevelled edge 54 which allows the saw to be placed directly on top of the rib (rather than sliding the saw onto the guide rail from one end of the rail). In other words, as the saw is placed on the guide rail, the bevelled edge of the roller 50 allows the rid to move between the roller and surface 42, gently easing the roller out of the rib's path as the rib and channel engage one another. This action can be assisted if the rib has a rounded edge, in cross-section.

Use of a roller is preferable to a sliding block arrangement as described for the first embodiment. It has been found that a roller is less likely to jam as the saw is moved down a guide rail in direction A: In some cases, the block can twist causing jamming between the block and the rib.

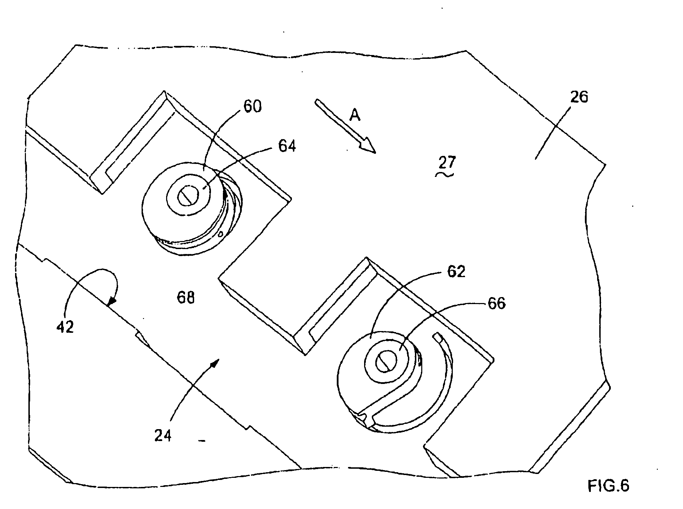

A third embodiment is shown schematically in figure 6. This embodiment comprises one or more cam wheels 60, 62. The cam is held in position by a pin 64 and 66 respectively, about which each cam rotates. The cam has a contact surface 68 arranged to face an opposite surface of the channel such that a guide rail rib can fit between the contact surface of the cam and guide rail. The cam is rotatably moveable between a first and second position, such that in the first position, the distance between the contact surface of the cam and the opposite surface of the channel is less than the width of the guide rail's rib, and in the second position, the distance between the contact and opposite surface respectively is greater than the width of the channel in which the rib is locatable.

A watch spring (not shown) can be used to urge the cams into a position where the cam engages with the guide rail's rib when the saw is disposed on the rail. The cam should be configured to operate with the same principles as those described above, that is to act a brake by jamming the rib in the channel to prevent relative movement of the rib in one direction, but to allow free movement of the rib in another opposite direction A. Thus, the smallest distance between the cam's contact surface 68 and the opposite surface of the channel 42 should be less than the width of the rib fitting into the channel (i.e. when the cam is in the first position, as discussed earlier).

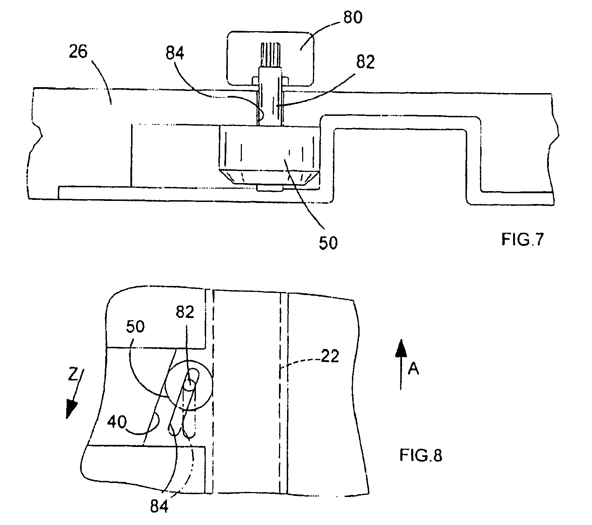

In addition, the anti-kickback device can be provided with a manually operable button 80, as shown in figure 7. The button is coupled to the roller 50 by a pin 82. Preferably, the pin 82 is fixed to the roller so that it can not rotate with respect to the roller, although it is to be understood that non-fixed configuration could also be used. The pin is guided by a slot 84 passing through the footplate 26. The slot is linear in its longitudinal direction and has a width which is greater than the diameter of the pin to allow relatively free or unhindered movement of the pin therein. The slot can have parallel sides which are angled with respect to the guide rail rib or footplate channel within an angular range arranged to be between zero degrees (that is, parallel to the guide rail rib) and parallel to the sliding surface 40, with reference to figure 8.

The button provides a means for the user to free or unlock the anti-kickback device should it become jammed during operation. The user is able to rotate the button to free the roller 50 from the guide rail rib 22 after a jamming event has occurred. Where the roller is fixedly attached to the button, rotation of the button causes the roller to rotate and free itself from the guide rail rib and sliding surfaces between which it has become jammed.

Furthermore, the user can move the roller out of contact with the guide rail rib by pulling the button in a direction which moves the roller along or substantially along the sliding surface 40. By holding the button in this operative position, the roller is held away from the sliding surface and the anti-kickback device can be overridden. In other words, the user is thereby able to deactivate the anti-kickback device and move the circular saw along the guide rail in a direction opposite to arrow A (see figure 1, for instance) without the anti-kickback device locking the saw's footplate to the guide rail. This is an advantageous feature of the present invention because it allows the user to bring the saw back to a starting position on the guide rail after a cut has been completed without having to lift the saw from and then replace it on the guide rail at the start position. Preferably, the direction in which the button is pulled to deactivate the anti-kickback device (as shown by arrow Z in figure 8) is opposite to the cut direction, that is, opposite to Arrow A. Thus, the user can release the anti-kickback device and pull the saw along the guide rail in a direction opposite to A with one movement or action, and single handed.

The button is moveable to the operative position against the resilience of spring. Releasing the button therefore causes it, and hence the roller, to move to the button's inoperative position, where the roller contactable with the guide rail rib.

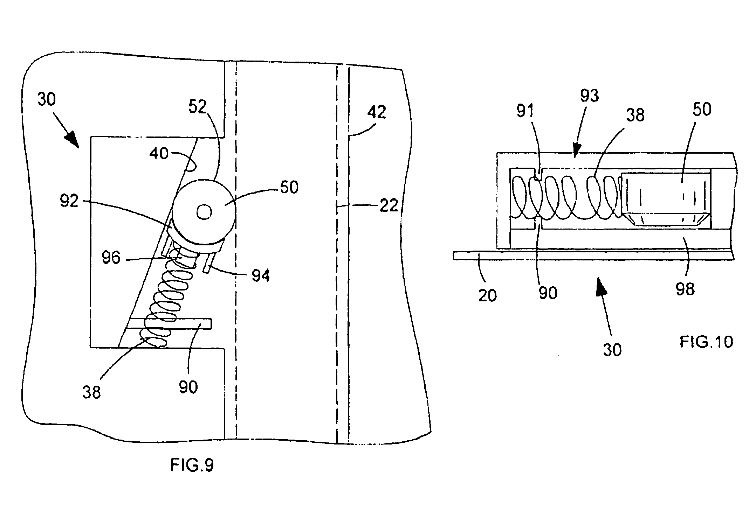

Referring now to figure 9, a coupling member 92 for coupling the spring 38 to the roller 50 is shown. The coupling member has a generally cup-shaped profile adapted to receive the circumference 52 of the roller 50. The coupling member also comprises protrusions 94 which can form a cavity into which a first end of the spring is received. A nipple 96 can be provided to fit inside the coils of a spring and thereby hold the spring in relation to the coupling member, and hence the roller. A combination of both the protrusions 94 and nipple 96 are preferred, but either one of these arrangements could be used independently.

A bar or rib-like protrusion 90 can be arranged on either or both of the footplate and/or a cover or retaining plate of the anti-kickback mechanism for retaining a second end of the spring in relation to the footplate. Referring to figure 10, a bar-like protrusion 90 extends from a retaining plate 98 of the anti-kickback device 30. The retaining plate acts to retain the components of the anti-kickback device on the saw's footplate 26, amongst other functions. The rib is arranged to pinch the spring against a portion 93 of the footplate adapted to receive the anti-kickback device. In the case of a coil spring, the rib can be arranged to fit between neighbouring coils of the spring. A further protrusion 91 can be disposed on the portion 93 of the footplate to further pinch the spring member. Thus, the second end of the spring can be held in a position relative the saw's footplate. Of course, either or both or the protrusions 90 and 91 can be used.

The coupling member and/or the spring member retaining protrusion 90 act to help prevent the spring from disengaging with components of the anti-kickback device. This can assist with reducing the likelihood of the anti-kickback failing. Thus, the operator is able to utilise the device for long periods without having to service the anti-kickback device

The block, roller or cam can be made from any suitable material, such as metal (steel or aluminium for instance), synthetic plastic (high impact nylon for instance), or resilient material (such as rubber). Factors, such as cost of manufacture, wear rates and coefficient of friction, may influence the choice of material.

Other embodiments of the present invention will be envisaged by the skilled person. For instance it is perceived that a separate anti-kickback device could be retro-fitted to a plunge-action circular saw's footplate by means of bolts engaging with threaded holes in the footplate, or the like. Furthermore, it is not essential that the anti-kickback device is disposed on the footplate and a series of anti-kickback devices could be disposed on a guide rail arranged to engage with the footplate channel of a circular saw. Yet further, it might be desirable to arrange for an anti-kickback device to operate between the footplate and an alternative portion of the guide rail, other than the longitudinal rib. Still further, it might be possible to provide an anti-kickback device without a spring to urge the jamming device into a first position. For instance, if the block were made from a resilient material, such as rubber, the device could be arranged such that a spring is not necessary - the resilience of the material acts to urge the block into a suitable position. Also, the spring is not limited to a coil spring as shown in the drawings, and other resilient means could be used, such as a leaf spring or a rod of resilient material (rubber, for instance).

## Claims

1. A hand operated circular saw (10) comprising;
a base plate (26) comprising a channel (24) arranged to cooperate with a guide rail (20) member,
a motor housing (12),
a gripping portion (14) and a switch (16) for manual operation of a motor disposed in the motor housing, and
a cowl (18) coupled to the base plate and arranged to accommodate at least a portion of a saw blade disposed on an output spindle coupled to the motor,
said output spindle being moveable with respect to the base plate and/or cowl between a first position and a second position thereby providing a plunge-cut action of the circular saw;
**characterised in that** the base plate further comprises:
a mechanism (30) comprising one or more cams (60, 62) and a manually operable button (80) coupled to the mechanism, the button being moveable between an operative position and an inoperative position, wherein the or each cam is urged into a first position by a spring, wherein, when the or each cam is in the first position, a portion of the or each cam extends a distance into a channel (24) of the base plate (26) such that the shortest distance between a contact surface (68) of the or each cam and the opposite surface of the channel is less than the width of the channel, or less than the width of a rib (22) on a guide rail wherein the mechanism is arranged to cooperate with a rib (22) of a guide rail such that, when the circular saw is disposed on a guide rail and the button is in the inoperative position, the mechanism offers relatively low friction between the saw and guide rail in a first direction thereby allowing the saw to be moved manually with respect to the guide rail in the first direction, and the mechanism offers relatively high friction between the saw and guide rail in a second direction thereby preventing free movement of the saw with respect to the guide rail in the second direction, and when the button is in the operative position, the mechanism can be overridden.

2. Apparatus according to claim 1, wherein the or each cam (60, 62) is moveable between the first position and a second position, such that,
in the first position a portion of the or each cam extends a distance into a channel of the base plate such that the shortest distance between a contact surface of the or each cam and the opposite surface of the channel is less than the width of the channel, and
in the second position, the distance between a contact surface of the or each cam and the opposite surface of the channel is greater than the width of a rib on a guide rail.

3. Apparatus according to either one of claims 1 or 2, wherein at least one said cam (60, 62) is rotatably disposed on the saw's base plate (26).

4. Apparatus according to either one of claims 1 or 2, wherein the button (80) is fixedly coupled to the mechanism (30) by a pin (82) and the pin can pass through a slot (84) disposed in the base plate (26).

5. Apparatus according to any one of the previous claims, wherein the spring (38) is arranged to urge the button into the inoperative position.

## Patentansprüche

1. Handbetätigte Kreissäge (10) mit
einer Basisplatte (26), die einen Kanal (24) aufweist, der angeordnet ist, um mit einem Element einer Führungsschiene (20) zusammenzuwirken,
einem Motorgehäuse (12),
einem Griffabschnitt (14) und einem Schalter (16) für eine manuelle Betätigung eines Motors, der in dem Motorgehäuse angeordnet ist, und
einer Haube (18), die mit der Basisplatte gekoppelt ist und angeordnet ist, um zumindest einen Teil eines Sägeblattes aufzunehmen, das an einer Ausgangswelle angeordnet ist, die mit dem Motor gekoppelt ist,
wobei die Ausgangswelle in Bezug auf die Basisplatte und/oder die Haube zwischen einer ersten Stellung und einer zweiten Stellung beweglich ist, um dabei eine Tauchsägewirkung der Kreissäge bereitzustellen;
**dadurch gekennzeichnet, dass** die Basisplatte ferner aufweist:
einen Mechanismus (30), der eine oder mehrere Nocken (60, 62) und einen manuell betreibbaren Knopf (80), der an den Mechanismus gekoppelt ist, aufweist, wobei der Knopf zwischen einer betätigten Stellung und einer nicht-betätigten Stellung beweglich ist, wobei die oder jede Nocke durch eine Feder in eine erste Stellung gedrückt wird, wobei dann, wenn die oder jede Nocke in der ersten Stellung ist, sich ein Abschnitt der oder jeder Nocke um einen Abstand in einen Kanal (24) der Basisplatte (26) derart erstreckt, dass der kürzeste Abstand zwischen einer Kontaktfläche (68) der oder jeder Nocke und der gegenüberliegenden Oberfläche des Kanals kleiner als eine Breite des Kanals oder kleiner als die Breite einer Rippe (22) auf einer Führungsschiene ist, wobei der Mechanismus angeordnet ist, um mit einer Rippe (22) einer Führungsschiene zusammenzuwirken, so dass dann, wenn die Kreissäge an einer Führungsschiene angeordnet ist und der Knopf in der nicht-betätigten Stellung ist, der Mechanismus eine vergleichsweise geringe Reibung zwischen der Säge und der Führungsschiene in einer ersten Richtung liefert, um der Säge dabei zu ermöglichen, von Hand in Bezug auf die Führungsschiene in der ersten Richtung bewegt zu werden, und der Mechanismus eine vergleichsweise hohe Reibung zwischen der Säge und der Führungsschiene in einer zweiten Richtung liefert, um dabei eine freie Bewegung der Säge in Bezug auf die Führungsschiene in der zweiten Richtung zu verhindern, und dass dann, wenn der Knopf in der betätigten Stellung ist, der Mechanismus ausgeschaltet werden kann.

2. Vorrichtung nach Anspruch 1, wobei die oder jede Nocke (60, 62) zwischen der ersten Stellung und einer zweiten Stellung beweglich ist, so dass
sich in der ersten Stellung ein Abschnitt der oder jeder Nocke um einen Abstand in einen Kanal der Basisplatte derart erstreckt, dass der kürzeste Abstand zwischen einer Kontaktfläche der oder jeder Nocke und der gegenüberliegenden Oberfläche des Kanals kleiner als die Breite des Kanals ist, und
in der zweiten Stellung der Abstand zwischen einer Kontaktfläche der oder jeder Nocke und der gegenüberliegenden Oberfläche des Kanals größer als die Breite einer Rippe auf einer Führungsschiene ist.

3. Vorrichtung nach einem der Ansprüche 1 oder 2, wobei mindestens eine Nocke (60, 62) auf der Basisplatte (26) der Säge drehbar angeordnet ist.

4. Vorrichtung nach einem der Ansprüche 1 oder 2, wobei der Knopf (80) fest mit dem Mechanismus (30) durch einen Stift (82) verbunden ist, und wobei der Stift durch einen Schlitz (84), der in der Basisplatte (26) vorgesehen ist, läuft.

5. Vorrichtung nach einem der vorhergehenden Ansprüche, wobei die Feder (38) vorgesehen ist, um den Knopf in die nicht-betätigte Stellung zu drücken.

## Revendications

1. Scie circulaire actionnée manuellement (10)
comprenant :
une plaque de base (26) comprenant un canal (24) agencé pour coopérer avec une glissière de guidage (20),
un boîtier de moteur (12),
une partie de préhension (14) et un commutateur (16) destiné à actionner manuellement un moteur disposé dans le boîtier de moteur, et
un capot (18) couplé à la plaque de base et disposé de manière à recevoir au moins une partie d'une lame de scie placée sur une broche de sortie couplée au moteur,
ledit arbre de sortie pouvant être déplacé par rapport à la plaque de base et/ou au capot entre une première position et une deuxième position, produisant ainsi une action de découpe plongeante de la scie circulaire ;
**caractérisée en ce que** la plaque de base comprend en outre :
un mécanisme (30) comprenant une came (60, 62) ou plus et un bouton actionnable manuellement (80) couplé au mécanisme, le bouton pouvant être déplacé entre une position de fonctionnement et une position d'arrêt, dans lequel la ou chaque came est sollicitée dans une première position par un ressort, dans lequel, lorsque la ou chaque came est dans la première position, une partie de la ou de chaque came s'étend d'une certaine distance dans un canal (24) de la plaque de base (26) de manière que la plus courte distance entre une surface de contact (68) de la ou de chaque came et la surface opposée du canal soit inférieure à la largeur du canal, ou inférieure à la largeur d'une nervure (22) sur une glissière de guidage, dans lequel le mécanisme est disposé de façon à coopérer avec une nervure (22) d'une glissière de guidage de manière que, lorsque la scie circulaire est placée sur une glissière de guidage et que le bouton est dans la position d'arrêt, le mécanisme présente un frottement relativement faible entre la scie et la glissière de guidage dans une première direction, permettant ainsi de déplacer manuellement la scie par rapport à la glissière de guidage dans la première direction, et le mécanisme présente un frottement relativement élevé entre la scie et la glissière de guidage dans une seconde direction, permettant ainsi d'empêcher un mouvement libre de la scie par rapport à la glissière de guidage dans la seconde direction et, lorsque le bouton est dans la position de fonctionnement, le mécanisme peut être neutralisé.

2. Appareil selon la revendication 1, dans lequel la ou chaque came (60, 62) peut être déplacé entre la première position et une seconde position de manière que,
dans la première position, une partie de la ou chaque came s'étende d'une certaine distance dans un canal de la plaque de base de manière que la distance la plus courte entre une surface de contact de la ou de chaque came et la surface opposée du canal soit inférieure à la largeur du canal et que,
dans la deuxième position, la distance entre une surface de contact de la ou de chaque came et la surface opposée du canal soit supérieure à la largeur d'une nervure sur une glissière de guidage.

3. Appareil selon l'une quelconque des revendications 1 ou 2, dans lequel au moins une dite came (60, 62) est placée en rotation sur la plaque de base (26) de la scie.

4. Appareil selon l'une quelconque des revendications 1 ou 2, dans lequel le bouton (80) est couplé de manière fixe au mécanisme (30) par une broche (82), la broche pouvant passer à travers une fente (84) placée dans la plaque de base (26).

5. Appareil selon l'une quelconque des revendications précédentes, dans lequel le ressort (38) est disposé de manière à solliciter le bouton dans la position d'arrêt.
